# EUROPÄISCHE PATENTANMELDUNG

(11) **EP 1 810 813 A2**
(43) Veröffentlichungstag der Anmeldung: **25.07.2007**
(21) Anmeldenummer: 06025280.6
(22) Anmeldetag: 07.12.2006
(51) Int. Cl.: B29C 49/20, B29C 49/24, B65D 23/08

(54) **Verfahren zum Herstellen von Flaschen aus Kunststoff mit einem Verstärkungs- oder Stabilisierungselement durch Blasen sowie nach diesem Verfahren hergestellte Flaschen**

(30) Priorität: 19.01.2006 DE 102006002632
(71) Anmelder: KHS AG, 44143 Dortmund (DE)
(72) Erfinder: Till, Volker, 65719 Hofheim/Taunus (DE)

(57) **Zusammenfassung**

Eine Flasche (1) oder dergleichen in einer Blasform (3) durch Blasen aus einer Preform (5) hergestellter Behälter aus Kunststoff (1) ist an der Außenfläche eines zu stabilisierenden Behälterbereich mit wenigstens einem Verstärkungs- oder Stabilisierungselement (2) versehen, welches während des Formens bzw. Blasens formschlüssig oder kraftschlüssig mit dem Behälter (1) verbunden wurde.

## Beschreibung

Die Erfindung bezieht sich auf Verfahren gemäß Oberbegriff Patentanspruch 1 sowie auf einen Behälter gemäß Oberbegriff Patentanspruch 14.

Bekannt ist die Herstellung von Flaschen aus Kunststoff, auch PET-Flaschen, im Blasverfahren unter Verwendung von Preformen (Formrohlingen), die im erwärmten Zustand in einer Blasform durch Blasen zu der jeweiligen Flasche verformt werden. Bekannt sind insbesondere auch Kunststoff- oder PET-Flaschen, die als Leichtflaschen sehr dünnwandig ausgeführt sind und daher insbesondere an ihrem Flaschenkörper und speziell an ihrem in der Regel zylindrischen oder annähernd zylindrischen Flaschenrumpf eine geringe mechanische Stabilität aufweisen, d.h. relativ weich ausgebildet sind. Derartige dünnwandige PET-Leichtflaschen, die in der Regel nur jeweils einmal verwendet und die bzw. deren Material nach dieser Verwendung zur Herstellung neuer Flaschen recycelt werden, haben u.a. den Vorteil eines geringen Gewichtes und eines geringen Materialverbrauchs. Durch die dünnwandige Ausbildung besteht allerdings die Gefahr, dass derartigen Leichtflaschen beim manuellen Fassen in der Flaschenmitte verformt werden und/oder beim Fassen in der Flaschenmitte aufgrund des Gewichtes des Füllgutes abknicken.

Aufgabe der Erfindung ist es, ein Verfahren zu Herstellen von Flaschen oder dergleichen Behältern aus Kunststoff aufzuzeigen, welches unter Beibehaltung der Möglichkeit einer rationellen und preiswerten Fertigung auch bei dünnwandigen Behältern eine verbesserte mechanische Stabilität schafft. Zur Lösung dieser Aufgabe ist ein Verfahren entsprechend dem Patentanspruch 1 ausgebildet. Ein Behälter ist Gegenstand des Patentanspruches 9.

Das mechanische Stabilisierungs- oder Verstärkungselement ist beispielsweise ein- oder mehrlagig aus Flachmaterial, z.B. aus Kunststoff und/oder aus Karton und/oder aus mehrlagigem Papier hergestellt. Auch andere Ausbildungen des Verstärkungs- oder Stabilisierungselementes sind denkbar.

Das wenigstens eine Verstärkungs- oder Stabilisierungselement ist an dem erfindungsgemäßen Behälter beispielsweise durch Formschluss gehalten, und zwar z.B. dadurch, dass es den Behälter an dem zu stabilisierenden Behälterbereich ring- oder hülsenartig umschließt und der Behälter mit seiner Außenfläche fest gegen die Innenfläche des Verstärkungs- oder Stabilisierungselementes anliegt und/oder beispielsweise dadurch, dass der Behälter dort, wo das Verstärkungs- oder Stabilisierungselement vorgesehen ist, tailliert ist und/oder oberhalb und/oder unterhalb des Verstärkungs- oder Stabilisierungselementes Abschnitte mit einem etwas vergrößertem Außendurchmesser aufweist, sodass das Verstärkungs- oder Stabilisierungselement hierdurch gegen axiales Verschieben am Behälter gesichert ist. Auch andere Arten einer formschlüssigen Befestigung der Verstärkungs- oder Stabilisierungselemente an den Behältern, insbesondere angepasst an die Art und Form der Verstärkungs- oder Stabilisierungselemente sind möglich.

Ebenfalls ist erfindungsgemäß vorgesehen, das wenigstens eine Verstärkungs- oder Stabilisierungselement mittels Kraftschluss mit dem Behälter zu verbinden

Ein ganz wesentlicher Vorteil der Erfindung besteht darin, dass für die Fertigung der mit den Verstärkungs- oder Stabilisierungselementen versehenen Behälter die bei einem Hersteller, beispielsweise bei einem Getränkehersteller oder einem Abfüllbetrieb bereits vorhandenen Blasmaschinen ohne Änderung oder zumindest ohne wesentliche Änderung, insbesondere auch der Steuerung der Blasformen verwendet werden können.

Weiterbildungen der Erfindung sind Gegenstand der Unteransprüche. Die Erfindung wird im Folgenden anhand der Figuren an einem Ausführungsbeispiel näher erläutert. Es zeigen:

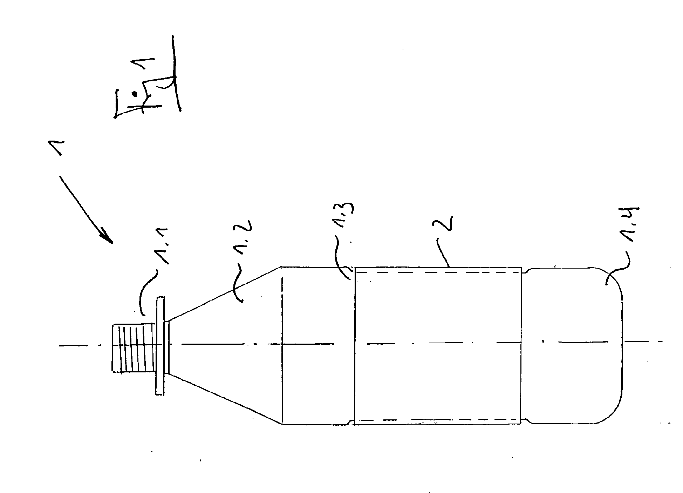

- Fig. 1: in vereinfachter schematischer Darstellung eine im Blasverfahren hergestellte Kunststoff-Flasche gemäß der Erfindung;
- Fig. 2: in den Positionen a) - c) verschiedene Verfahrensschritte bei der Herstellung der Flasche der Figur 1.
- Fig. 3: in den Positionen a) und b) weitere Varianten zur formschlüssigen Befestigung und in der Position c) eine symbolisch dargestellte Variante zur kraftschlüssigen Befestigung eines Stabilisierungs- oder Verstärkungselementes auf der Flasche.

In den Figuren ist 1 eine im Blasverfahren aus Kunststoff hergestellte dünnwandige PET-Flasche (PET-Leichtflasche) mit einem die Flaschenmündung aufweisenden Mündungsbereich 1.1, mit einem sich hieran anschließenden, im Querschnitt erweiternden Brustbereich 1.2, mit einem bei der dargestellten Ausführungsform im Wesentlichen kreiszylinderförmigen Flaschenkörper oder Rumpfbereich1.3 sowie mit einem strukturierten Flaschenboden 1.4.

An dem Rumpfbereich 1.3 ist die Flasche 1 von einer Hülse 2 umschlossen, die mit ihrer Innenfläche dicht gegen die Außenfläche des Rumpfbereichs 1.3 anliegt und die als Verstärkungs- oder Stabilisierungselement die Flasche 1 an dem Rumpfbereich 1.3 mechanisch stabilisiert. Die Hülse 2, die sich bei der dargestellten Ausführungsform über nahezu die gesamte axiale Länge des Rumpfbereichs 1.3 erstreckt, ist aus einem für die Stabilisierung geeigneten Flachmaterial, beispielsweise aus Karton oder Pappe (als Pappröhre) oder aus einem mehrlagigen oder mehrlagig verklebten Papier gefertigt, und zwar unter Verwendung der üblichen Technik zum Herstellen von Hülsen oder Röhren aus Pappe oder Karton, z.B. durch Wickeln.

Die Hülse 2 ist an der Flasche 1 zum einen dadurch gesichert, dass der Rumpfbereich 1.3 fest gegen die Innenfläche der Hülse 2 anliegt, bei der dargestellten Ausführungsform zum anderen auch dadurch, dass der Rumpfbereich 1.3 im Bereich der Hülse 2 leicht tailliert ist, sodass die Hülse 2 hierdurch zusätzlich gegen unerwünschtes Herunterrutschen an der Flasche 1 gesichert ist.

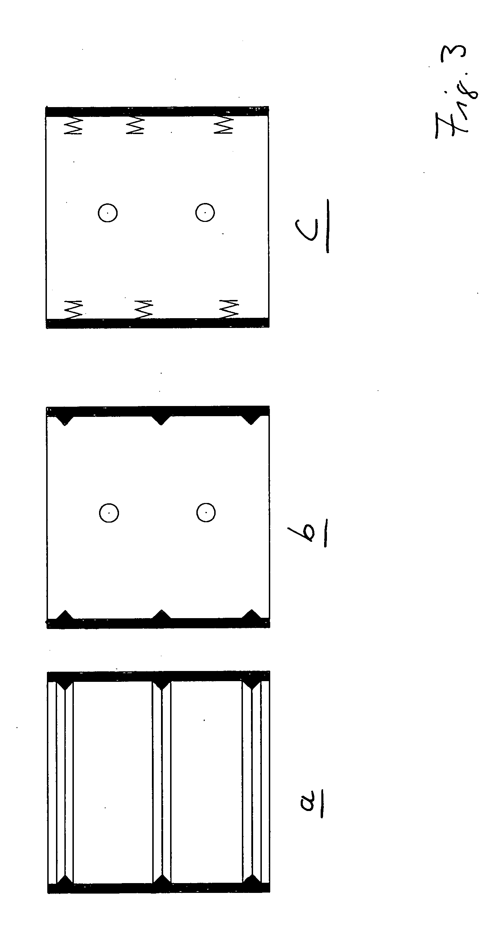

Ebenfalls ist erfindungsgemäß - wie in der Figur 3 dargestellt - vorgesehen, dass die Hülse 2 dadurch formschlüssig an der Flasche 1 gehalten wird, dass die Hülse 2 an ihrer Innenseite Elemente aufweist, welche sich mit der geblasenen Flasche gleichsam verzahnen, und somit eine Relativverschiebung zwischen Hülse 2 und Flasche 1 in axialer Richtung ausschließen. Bei diesen Elementen kann es sich beispielsweise um Erhebungen mit dreieckigem oder halbkreisförmigem Querschnitt, Fig. 3 a), handeln, welche den Innenmantel der Hülse 2 zumindest teilweise ausfüllen bzw. durchlaufen. Ebenfalls kann es sich bei diesen Elementen beispielsweise um kegelförmige Elemente, Fig. 3 b), handeln, welche sich punktartig aus dem Innenmantel der Hülse 2 erstrecken.
Des Weiteren kann es sich bei diesen Elementen aber auch um Löcher oder auf der Innenseite der Hülse 2 angeordnete Vertiefungen handeln. Auch bei diesen Elementen entsteht während des Blasvorganges die oben beschriebene Verzahnung zwischen Hülse 2 und Flasche 1.

Durch diese Vorgehensweise kann die äußere Gestalt der Flasche 1 frei gestaltet werden, auf eine Vergrößerung des Flaschendurchmessers ober- oder unterhalb der Hülse 2 kann verzichtet werden.

Die Hülse 2 dient vorzugsweise auch als Etikett und ist hierfür an ihrer Außenfläche entsprechend bedruckt und/oder grafisch und/oder farblich gestaltet.

Es ist erfindungsgemäß ebenfalls vorgesehen, auch die Innenseite der Hülse 2 zu bedrucken, bzw. diese in gewünschter Weise zu gestalten.

Durch diese Vorgehensweise ergibt sich beispielsweise die Möglichkeit, die auf der Innenseite der Hülse 2 angebrachten Informationen oder Darstellungen durch ein, diametral zu diesen Darstellungen angeordnetes Loch in der Hülse 2 zu betrachten, wodurch der Verbraucher dazu veranlasst wird, sich längere Zeit mit dem Produkt zu befassen, was sich nach herrschender Lehrmeinung positiv auf den Absatz dieses Produktes auswirkt.

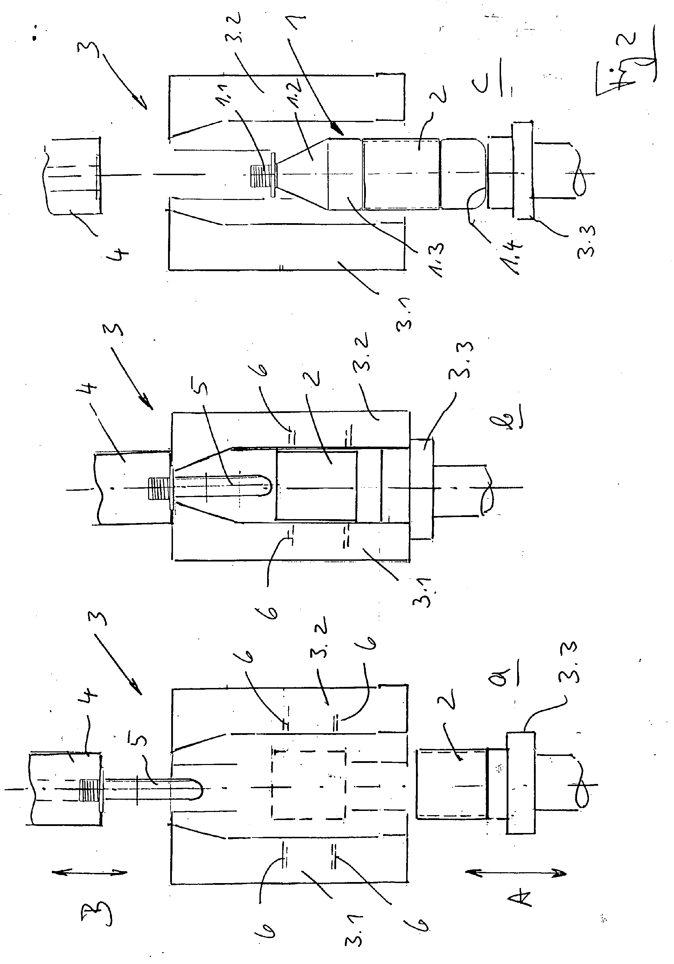

Das Aufbringen der Hülse 2 auf die Flaschen 1 erfolgt bei deren Herstellung. Die Figur 2 zeigt in den Positionen a) - c) schematisch eine der Blasformen 3 einer Blasmaschine beispielsweise einer Blasmaschine umlaufender Bauart, die an einem um eine vertikale Maschinenachse umlaufend angetriebenen Rotor eine Vielzahl solcher Blasformen 3 aufweist.

Die Blasform 3 ist bei der dargestellten Ausführungsform im Wesentlichen dreiteilig ausgeführt, und zwar bestehend aus zwei Formteilen 3.1 und 3.2, die bei der Herstellung mit ihren innenliegenden Formflächen den Mündungsbereich 1.1, den Brustbereich 1.2 und den Rumpfbereich 1.3 der jeweiligen Flasche 1 ausformen, sowie aus einem Blasformboden 3.3, der beim Herstellen der jeweiligen Flasche 1 im Wesentlichen den Flaschenboden 1.4 ausformt. Bei geschlossener Blasform 3 bilden die beiden Formteile 3.1 und 3.2 sowie der Boden 3.3 einen Formraum, der bei der Herstellung der Flasche 1 durch den die Blasdüse bildenden Glaskopf 4 mit der dort vorbereiteten, erwärmten und in den Formraum hineinragenden Preform 5 geschlossen ist. Der Blasformboden 3.3 und der Blaskopf 4 sind durch nicht dargestellte Führungs- und Steuermittel in vertikaler Richtung bewegbar, wie dies in der Figur 2 mit den Doppelpfeilen A und B angedeutet ist.

Im Detail erfolgt die Herstellung der jeweiligen Flasche 1 grundsätzlich in der Weise, dass an einer Hülsenaufgabe auf den abgesenkten und von der Blasform 3 entfernten Blasformboden 3.3 eine vorbereitete Hülse 2 aufrecht stehend, d. h. mit ihrer Hülsenachse in vertikaler Richtung orientiert aufgesetzt wird. Anschließend wird die auf dem Blasformboden 3.3 angeordnete Hülse 2 beim Schließen der Blasform 3 mit diesem Blasformboden von unten her hin in den Formraum eingefahren, und zwar bis auf das Niveau des zu formenden Rumpfbereichs 1.3 der herzustellenden Flasche 1. Durch geeignete Halte- oder Fixiermittel, beispielsweise durch Unterdruck- oder Vakuumdüsen 6 an der Innenfläche wenigstens eines Formteils 3.1 bzw. 3.2 wird die so im Formraum positionierte Hülse 2 fixiert. Der Blasformboden 3.3 wird nach unten auf das Niveau des zu formenden Flaschenbodens 1.4 zurückbewegt.

Die Blasform ist mit Absenken des mit der Preform 5 versehenen Blaskopfes 4 endgültig geschlossen. Durch Zuführen der Blasluft über den Blaskopf wird dann unter Hitzeeinwirkung oder Erwärmen die an ihrem Rumpfbereich 1.3 mit der Hülse 2 versehene Flasche 1 aus der PET-Preform 5 geformt. Zum Entformen der Flasche 1 wird die Blasform 3 geöffnet, d. h. die beiden Formteile 3.1 und 3.2 werden auseinanderbewegt oder -geschwenkt, der Blasformboden 3 wird abgesenkt, die geformte Flasche wird beispielsweise an ihrem Halsring aufgenommen, sodass diese dann ohne eine Störkontur oder ohne Behinderung aus der Blasform 3 entnommen werden kann. Auf den abgesenkten Blasformboden 3 wird dann an der Hülsenaufgabe erneut eine Hülse 2 für eine weitere Flasche 1 positioniert.

Anstelle der Vakuum- oder Unterdruckdüsen 6 oder aber zusätzlich zu diesen können andere, beispielsweise mechanische Mittel vorgesehen sein, um die Hülse 2 oder ein anderes Verstärkungs- oder Stabilisierungselement im Formraum der geschlossenen Blasform 3 auf dem Niveau des zu versteifenden bzw. zu stabilisierenden Flaschebereichs zu halten.

Die Erfindung wurde voranstehend an einem Ausführungsbeispiel beschrieben. Es versteht sich, dass Änderungen sowie Abwandlungen möglich sind, ohne das dadurch der der Erfindung zugrunde liegende Erfindungsgedanke verlassen wird.

So ist es beispielsweise möglich, anstelle der Hülsen 2 aus Karton oder Pappe auch andere Verstärkungs- oder Stabilisierungselemente vorzusehen, welche dann während des Ausformens bzw. Blasens der Flaschen 1 mit diesen formschlüssig oder kraftschlüssig verbunden werden, beispielsweise Verstärkungs- oder Stabilisierungselemente, welche die Flaschen 1 an dem jeweiligen zu versteifenden Bereich vollständig oder aber - bei entsprechender Ausbildung und/oder Materialwahl der bzw. für die Verstärkungs- oder Stabilisierungselemente - auch nur teilweise, beispielsweise spangenartig umschließen.

Insbesondere ist im Rahmen der vorliegenden Erfindung ebenfalls vorgesehen, ein Verstärkungs- oder Stabilisierungselement auch kraftschlüssig mit der Flasche zu verbinden, wobei die Verbindung ausschließlich kraftschlüssig, als auch kraft- und formschlüssig erfolgen kann.

Da während des Herstellungsprozesses von durch Streckblasen hergestellter Flaschen und Behälter unweigerlich ein Schrumpfvorganges der Flasche 1 auch in ihrem Durchmesser auftritt, ist diese Vorgehensweise von besonderem Vorteil, da auf diese Art und Weise trotz des Schrumpfens ein fester Sitz der Hülse 2 erzielt wird.

Dazu ist beispielsweise vorgesehen, das Verstärkungs- oder Stabilisierungselement vor seiner Verbindung mit der Flasche elastisch aufzuweiten, so dass es sich nachfolgend, bedingt durch seine Rückverformung, fest an die Flasche anlegt, auf diese ringförmig eine Druckspannung ausübt und so die, vorzugsweise einen kreisförmigen Querschnitt aufweisende Flasche zusätzlich stabilisiert.

Zur Erzeugung der elastischen Aufweitung ist beispielsweise vorgesehen, innerhalb der Blasform Elemente anzuordnen, welche das Verstärkungs- oder Stabilisierungselement in einer ersten Position übernehmen, und anschließend in eine zweite, weiter von einander entfernte Position verfahren, wobei die elastische Aufweitung erzeugt wird.

Zur Erzeugung der kraftschlüssigen Verbindung ist ebenfalls vorgesehen, die Verstärkungs- oder Stabilisierungselemente aus einem Material herzustellen, welches in geeigneter Weise auf die, während des Blasvorganges herrschenden Temperaturen reagiert, so dass die gewünschte ringförmige Druckspannung erzeugt wird. Beispielhaft seien Stabilisierungselemente genannt, welche unter Wärmeeinwirkung schrumpfen, oder solche, welche sich unter Wärmeeinwirkung reversibel dehnen, bzw. aufweiten. Ebenfalls ist, wie in der Figur 3 c) dargestellt, vorgesehen, die Innenseite der Hülse 2 mit federnden, bzw. elastischen Elementen auszustatten, welche die schrumpfungsbedingte Durchmesserreduzierung der Flasche 1 ausgleichen und eine feste Verbindung zwischen Hülse 2 und Flasche 1 sicherstellen. Bei diesen Elementen kann es sich beispielsweise um flächige Elemente aus einem elastischen Schaumstoff, oder um solche aus besonders vorteilhaft gefaltetem Papier handeln.

Weiterhin besteht die Möglichkeit, dass jeweilige Verstärkungs- oder Stabilisierungselement von oben her in die geöffnete oder teilgeöffnete Blasform 3 einzubringen, wenngleich das vorstehend beschriebene Einführen der Hülsen 2 oder anderer Verstärkungs- oder Stabilisierungselemente von unten mit dem Blasformboden 3.3 den Vorteil bietet, dass dieses Einführen zeitgleich oder zeitlich überlappend mit dem Absenken des Blaskopfes 4 erfolgen kann und hierfür an der Blasform 3 bereits vorhandene Mittel, nämlich der Blasformboden 3.3 und dessen Steuermittel verwendet werden können. Bei einer Blasmaschine umlaufender Bauart können dann beide Zuführ- bzw. Zustellbewegungen (das Einführen des Verstärkungs- oder Stabilisierungselementes in den Formraum und das Absenken des Blaskopfes 4 zum Einführen der Preform 5 in den Formraum) im selben Winkelbereich der Drehbewegung des Rotors erfolgen, so dass für den Blasvorgang ein großer Winkelbereich der Drehbewegung des Rotors erhalten bleibt und hierdurch insbesondere auch keine Einschränkung der Leistung einer Blasmaschine durch das Einführen der Hülsen 2 oder anderer Verstärkungs- oder Stabilisierungselemente eintritt.

### Bezugszeichenliste

- 1: Flasche
- 1.1: Mündungsbereich der Flasche 1
- 1.2: Brustbereich der Flasche 1
- 1.3: Flaschenrumpf der Flasche 1
- 1.4: Flaschenboden
- 2: Hülse oder Verstärkungs- oder Stabilisierungselement
- 3: Blasform
- 3.1, 3.2: Formteil
- 3.3: Blasformboden
- 4: Blaskopf mit Blasdüse
- 5: Preform aus Kunststoff bzw. PET
- 6: Vakuumdüse

- A: Hubbewegung des Formbodens 3.3
- B: vertikale Bewegung des Blaskopfes 4

## Patentansprüche

1. Verfahren zum Herstellen von Flaschen oder dergleichen Behältern (1) aus Kunststoff, insbesondere zum Herstellen von PET-Flaschen, durch Blasen aus einer Preform (5) unter Verwendung einer Blasform (3),
**dadurch gekennzeichnet,**
**dass** vor dem Blasenvorgang in die Blasform (3) ein Verstärkungs- oder Stabilisierungselement (2) eingebracht wird, und
**dass** sich dieses Element zwischen einer Innen- oder Formfläche der Blasform (3) und der Außenfläche des sich beim Blasen aus der Preform (5) bildenden Behälters (1) befindet und durch den Fertigungsprozess formschlüssig und/oder kraftschlüssig mit dem Behälter (1) verbunden wird.

2. Verfahren nach Anspruch 1, **dadurch gekennzeichnet, dass** zum Blasen des Behälters (1) die an einem Blaskopf (4) oder einer Blasdüse vorbereitete Preform (5) in den Formraum der Blasform (3) von einer ersten Seite her, beispielsweise von der Oberseite her eingeführt und das wenigstens eine Verstärkungs- oder Stabilisierungselement (2) von einer zweite Seite her, beispielsweise von einer Unterseite der Blasform (3) in den Formraum eingebracht wird.

3. Verfahren nach Anspruch 1 oder 2, **dadurch gekennzeichnet, dass** das Einbringen des wenigstens einen Verstärkungs- oder Stabilisierungselementes (2) in den Formraum der Blasform (3) zeitgleich oder annähernd zeitgleich mit dem Einführen der Preform (5) in den Formraum und/oder dem Schließen der Blasform (3) erfolgt.

4. Verfahren nach einem der vorhergehenden Ansprüche, **dadurch gekennzeichnet, dass** das wenigstens eine Verstärkungs- oder Stabilisierungselement (2) in der Blasform (3) zumindest zeitweise fixiert und/oder gedehnt wird, beispielsweise durch Vakuum oder Unterdruck und/oder mechanische Fixiermittel.

5. Verfahren nach einem der vorhergehenden Ansprüche, **dadurch gekennzeichnet, dass** das Verstärkungs- oder Stabilisierungselement eine den Behälter (1) an dem zu stabilisierenden Behälterbereich (1,3) umschließendes hülsenartiges Element, beispielsweise eine aus einem Flachmaterial, z. B. aus Kunststoff, aus Karton oder aus mehrlagigen Papier hergestellte Hülse (2) ist.

6. Verfahren nach einem der vorhergehenden Ansprüche, **dadurch gekennzeichnet, dass** das wenigstens eine Verstärkungs- oder Stabilisierungselement ein den Behälter (1) an dem zu stabilisierenden Bereich (1.3) zumindest teilweise umgebendes gitter-, käfig- und/oder spangenartiges Element ist.

7. Verfahren nach einem der vorhergehenden Ansprüche, **dadurch gekennzeichnet, dass** das wenigstens eine Verstärkungs- oder Stabilisierungselement elastisch verformbar ist.

8. Verfahren nach einem der vorhergehenden Ansprüche, **dadurch gekennzeichnet, dass** das wenigstens eine Verstärkungs- oder Stabilisierungselement an seiner inneren Mantelfläche erhabene Formelemente aufweist.

9. Verfahren nach einem der vorhergehenden Ansprüche, **dadurch gekennzeichnet, dass** das wenigstens eine Verstärkungs- oder Stabilisierungselement an seiner inneren Mantelfläche Vertiefungen aufweist.

10. Verfahren nach einem der vorhergehenden Ansprüche, **dadurch gekennzeichnet, dass** das wenigstens eine Verstärkungs- oder Stabilisierungselement mindestens ein, seine Mantelfläche durchdringendes Loch aufweist.

11. Verfahren nach einem der vorhergehenden Ansprüche, **dadurch gekennzeichnet, dass** das wenigstens eine Verstärkungs- oder Stabilisierungselement an seiner inneren Mantelfläche federnde Elemente aufweist.

12. Verfahren nach einem der vorhergehenden Ansprüche, **dadurch gekennzeichnet, dass** das wenigstens eine Verstärkungs- oder Stabilisierungselement (2) zumindest an seiner der Behälteraußenseite abgewandten Fläche wenigstens teilweise bedruckt und/oder grafisch und/oder farblich gestaltet ist.

13. Verfahren nach einem der vorhergehenden Ansprüche, **gekennzeichnet durch** die Herstellung der Behälter (1) auf einer Blasmaschine umlaufender Bauart mit einer Vielzahl an einem um eine vertikale Maschinenachse umlaufend angetriebenen Rotor vorgesehenen Blasform (3).

14. Flasche oder dergleichen in einer Blasform (3) durch Blasen aus einer Preform (5) hergestellter Behälter (1) aus Kunststoff, insbesondere PET-Flasche,
**dadurch gekennzeichnet,**
**dass** der Behälter (1) an der Außenfläche eines zu stabilisierenden Behälterbereich (1.3) mit wenigstens einem Verstärkungs- oder Stabilisierungselement (2) versehen ist, welches während des Formens bzw. Blasens formschlüssig und/oder kraftschlüssig mit dem Behälter (1) verbunden wurde.

15. Behälter nach Anspruch 9, **dadurch gekennzeichnet, dass** das Verstärkungs- oder Stabilisierungselement eine den Behälter (1) an dem zu stabilisierenden Behälterbereich (1,3) umschließendes hülsenartiges Element, beispielsweise eine aus einem Flachmaterial, z. B. aus Kunststoff, Karton oder mehrlagigen Papier hergestellte Hülse (2) ist.

16. Behälter nach Anspruch 9 oder 10, **dadurch gekennzeichnet, dass** das wenigstens eine Verstärkungs- oder Stabilisierungselement ein den Behälter (1) an dem zu stabilisierenden Bereich (1.3) zumindest teilweise umgebendes Element, beispielsweise ein gitter-, käfig- und/oder spangenartiges Element ist.

17. Behälter nach einem der vorhergehenden Ansprüche, **dadurch gekennzeichnet, dass** das wenigstens eine Verstärkungs- oder Stabilisierungselement (2) zumindest an seiner der Behälteraußenseite abgewandten Fläche wenigstens teilweise bedruckt und/oder grafisch und/oder farblich gestaltet ist.

18. Behälter nach einem der vorhergehenden Ansprüche, **dadurch gekennzeichnet, dass** das wenigstens eine Verstärkungs- oder Stabilisierungselement (2) zumindest an seiner der Behälterinnenseite zugewandten Fläche wenigstens teilweise bedruckt und/oder grafisch und/oder farblich gestaltet ist.

19. Behälter nach Anspruch 18, **dadurch gekennzeichnet, dass** das wenigstens eine Verstärkungs- oder Stabilisierungselement (2) zumindest ein Loch aufweist, welches der, an der Innenseite des Verstärkungs- oder Stabilisierungselementes (2) angebrachten Bedruckung gegenüberliegend angeordnet ist.

20. Behälter nach einem der vorhergehenden Ansprüche, **dadurch gekennzeichnet, dass** der Behälter zumindest unterhalb der Soll-Position des unteren Endes des Verstärkungs- oder Stabilisierungselementes (2) einen größeren Durchmesser aufweist.
